# EUROPÄISCHE PATENTSCHRIFT

(11) **EP 3 841 043 B1**
(45) Veröffentlichungstag und Bekanntmachung des Hinweises auf die Patenterteilung: **04.10.2023**
(21) Anmeldenummer: 19755367.0
(22) Anmeldetag: 15.08.2019
(51) Int. Cl.: B65G 57/06, B65G 57/24, B65G 61/00

(54) **PALETTIERVORRICHTUNG UND VERFAHREN ZUM BETRIEB EINER PALETTIERVORRICHTUNG**
PALLETISING DEVICE AND METHOD FOR OPERATING A PALLETISING DEVICE
DISPOSITIF DE PALETTISATION ET PROCÉDÉ PERMETTANT DE FAIRE FONCTIONNER UN DISPOSITIF DE PALETTISATION

(30) Priorität: 21.08.2018 DE 102018214050
(43) Veröffentlichungstag der Anmeldung: 30.06.2021
(73) Patentinhaber: Körber Supply Chain Automation Eisenberg GmbH, 67304 Eisenberg (DE)
(72) Erfinder: GENSCH, Waldemar, 67304 Eisenberg (DE)
(74) Vertreter: Hörschler, Wolfram Johannes
(86) Internationale Anmeldenummer: PCT/EP2019/071942
(87) Internationale Veröffentlichungsnummer: WO 2020/038826

(56) Entgegenhaltungen:
- EP-A1- 2 653 417
- WO-A1-2012/118913
- DE-A1- 2 636 320
- DE-U1- 20 021 874
- IT-A1- MI20 081 787
- JP-A- H05 330 658
- NL-A- 8 801 528

## Beschreibung

Die Erfindung betrifft eine Palettiervorrichtung, umfassend eine Komprimiervorrichtung, welche einen umlaufenden geschlossenen Rahmen aufweist, wobei an dem Rahmen mindestens ein in eine horizontale Richtung beweglicher Schieber angeordnet ist, und eine Absetzeinrichtung, welche eine Transportfläche zum Transport von Artikellagen definiert. Die Erfindung betrifft auch ein Verfahren zum Betrieb einer entsprechenden Palettiervorrichtung, die eine Komprimiervorrichtung und eine Absetzeinrichtung umfasst.

### Stand der Technik

Eine Palettiervorrichtung dient dazu, Artikel, insbesondere Stückgüter, oder Gebinde zum Transport auf Paletten anzuordnen. Dazu werden die Artikel beispielsweise zunächst zu einzelnen Artikellagen zusammengefasst und dann lagenweise auf einer Palette, beziehungsweise auf einem bereits auf der Palette befindlichen Lagenstapel, abgesetzt. Eine solche Palettiervorrichtung ist beispielsweise aus dem Dokument EP 2 881 347 B1 bekannt.

Zur Palettierung durchlaufen die Artikel normalerweise zunächst eine Zuführvorrichtung, in der die zunächst einreihig oder mehrreihig hintereinander ankommenden Artikel zu stapelfähigen Artikellagen verschoben und/oder zusammengestellt werden. Die stapelfähigen Artikellagen werden dann nacheinander an die Palettiervorrichtung übergeben, welche die Artikellagen auf einem gewünschten Stapelplatz, insbesondere auf einer Palette, absetzt.

Die Palettiervorrichtung umfasst dazu beispielsweise einen Ablagetisch, in einer Weiterentwicklung ein Absetzband, welches einen umlaufenden Fördergurt umfasst. Die Absetzeinrichtung, beispielsweise ein Absetztisch oder Fördergurt, definiert eine Transportfläche zum Transport der Artikel, beziehungsweise der Artikellagen. Die Absetzeinrichtung der Palettiervorrichtung ist in der Regel an einer Hubeinrichtung vertikal beweglich. Bei der Palettierung wird jeweils eine stapelfähige Artikellage von der Zuführvorrichtung auf die Transportfläche der Absetzeinrichtung gefördert, und die Absetzeinrichtung wird vertikal auf die dem Lagenstapel entsprechende Höhe verfahren.

Aus der Druckschrift US 2014/0294553 A1 ist eine gattungsgemäße Palettiervorrichtung bekannt, welche ein Förderband und eine Komprimiervorrichtung umfasst. Bei der Palettierung wird dabei eine Artikellage von dem Förderband auf eine teilbare Bodenfläche der Komprimiervorrichtung gefördert und dort mittels Schiebern komprimiert und fixiert. Durch Wegfahren der teilbaren Bodenfläche und Wegbewegen der Schieber von der Artikellage wird die Artikellage auf dem Lagenstapel abgesetzt. Die unterste Artikellage eines Lagenstapels wird dabei direkt auf der Palette abgesetzt.

Auch aus der Druckschrift US 2013/0160403 A1 ist eine gattungsgemäße Palettiervorrichtung bekannt, welche ein Förderband und eine Komprimiervorrichtung mit einer Bodenfläche umfasst. Bei der Palettierung wird eine Artikellage von dem Absetzband auf die Bodenfläche der Komprimiervorrichtung gefördert. Die Komprimiervorrichtung weist einen feststehenden oder beweglichen Anschlag zum Ausrichten der Artikellage auf der Bodenfläche auf.

Das Dokument DE 10 2013 108 231 A1 offenbart eine Palettiervorrichtung und ein Verfahren zum Palettieren von Artikellagen. Die Palettiervorrichtung umfasst eine Zentriereinrichtung, welche vier bewegliche Schubleisten aufweist. Bei der Palettierung wird eine Artikellage zwischen den Schubleisten angeordnet und die Schubleisten werden auf die Artikellage zu bewegt, wodurch die Artikellage komprimiert und/oder zentriert wird.

Die Druckschrift DE 100 18 385 A1 offenbart ein Verfahren und eine Vorrichtung zum Laden von Stückgut. Die Vorrichtung umfasst einen umlaufenden Fördergurt, der an einem Roboterarm angebracht ist.

JP H05 330 658 A bezieht sich auf eine Palettiervorrichtung, die eine Komprimiervorrichtung umfasst, welche einen umlaufenden geschlossenen Rahmen aufweist. An dem Rahmen ist mindestens eine in horizontale Richtung verfahrbare Platte in Gitterform angeordnet, ferner eine Absetzvorrichtung, welche eine Transportfläche zum Transport von Artikellagen definiert. Der Rahmen umgibt eine in eine vertikale Richtung durchgehende Öffnung, wobei die Absetzeinrichtung relativ zu der Komprimiervorrichtung zwischen einer ersten Längsposition, um welche die Transportfläche zu dem Rahmen in Längsrichtung versetzt angeordnet ist, und einer zweiten Längsposition, in welcher eine Projektion der durchgehenden Öffnung in der vertikalen Richtung auf der Transportfläche steht, in die Längsrichtung beweglich ist.

Auch aus den Dokumenten EP 2 653 417 A1, DE 199 43 800 A1, DE 10 2015 200 731 A1 und DE 10 2013 218 442 A1 sind Palettiervorrichtungen sowie Verfahren zur Palettierung von Artikellagen bekannt.

Das Dokument NL 8 801 528 A offenbart eine Palettiervorrichtung nach dem Oberbegriff des Anspruchs 1.

### Aufgabe

Aufgabe der vorliegenden Erfindung ist es, eine Palettiervorrichtung der eingangs genannten Art zu verbessern. Insbesondere ist es Aufgabe der Erfindung, die Geschwindigkeit beim Palettieren zu erhöhen und ein präzises Absetzen der Artikellagen auf einem Lagenstapel zu gewährleisten.

### Lösung

Diese Aufgabe wird durch eine Palettiervorrichtung mit den Merkmalen des Anspruchs 1 gelöst. Vorteilhafte Ausgestaltungen und Weiterbildungen der Erfindung sind Gegenstand der Unteransprüche.

Eine gattungsgemäße Palettiervorrichtung umfasst eine Komprimiervorrichtung, welche einen umlaufenden geschlossenen Rahmen aufweist, wobei an dem Rahmen mindestens ein in eine horizontale Richtung beweglicher Schieber angeordnet ist. Der mindestens eine Schieber ist dabei mindestens translatorisch in die besagte horizontale Richtung beweglich.

Die gattungsgemäße Palettiervorrichtung umfasst ferner eine Absetzeinrichtung, welche eine Transportfläche zum Transport von Artikellagen definiert. Die Transportfläche erstreckt sich dabei zumindest annähernd horizontal, der mindestens eine Schieber ist also in eine Richtung parallel zu der Transportfläche beweglich, insbesondere translatorisch.

Erfindungsgemäß umgibt der Rahmen eine in eine Vertikalrichtung durchgehende Öffnung. Die Vertikalrichtung erstreckt sich dabei rechtwinklig zu der besagten horizontalen Richtung. Bei einer im Betrieb befindlichen Palettiervorrichtung steht die Vertikalrichtung in der Regel rechtwinklig zu einem Fußboden. Der Rahmen der Komprimiervorrichtung ist also oben offen und unten offen. Die durchgehende Öffnung dient insbesondere zur Aufnahme einer Artikellage.

Ferner ist die Absetzeinrichtung relativ zu der Komprimiervorrichtung zwischen einer ersten Längsposition, in welcher die Transportfläche zu dem Rahmen in eine Längsrichtung versetzt angeordnet ist, und einer zweiten Längsposition, in welcher eine Projektion der durchgehenden Öffnung in der Vertikalrichtung auf der Transportfläche steht, in die Längsrichtung beweglich. Die Längsrichtung erstreckt sich dabei rechtwinklig zu der Vertikalrichtung und stellt unter anderem eine horizontale Richtung dar. Eine auf der Absetzeinrichtung befindliche Artikellage kann somit durch eine Bewegung der Absetzeinrichtung von der ersten Längsposition in die zweite Längsposition zu der Komprimiervorrichtung, insbesondere in deren Öffnung, verbracht werden.

Erfindungsgemäß sind die Komprimiervorrichtung und die Absetzeinrichtung dabei an einer Hubvorrichtung in die Vertikalrichtung beweglich angeordnet. Somit können die Komprimiervorrichtung und die Absetzeinrichtung in Vertikalrichtung zu einer Oberfläche eines bereits erstellten Lagenstapels bewegt werden.

Eine Querrichtung erstreckt sich rechtwinklig zu der Vertikalrichtung und rechtwinklig zu der Längsrichtung. Die Querrichtung stellt, ebenso wie die Längsrichtung, eine horizontale Richtung dar. Die Transportfläche der Absetzeinrichtung erstreckt sich rechtwinklig zu der Vertikalrichtung in einer Ebene, die durch die Längsrichtung und die Querrichtung definiert ist. Unter einer horizontalen Richtung ist dabei jede Richtung zu verstehen, die rechtwinklig zu der Vertikalrichtung verläuft und parallel zu einer durch die Längsrichtung und die Querrichtung definierten Ebene.

Die Absetzeinrichtung umfasst beispielsweise einen umlaufenden Fördergurt. Der umlaufende Fördergurt der Absetzeinrichtung definiert dabei die Transportfläche zum Transport der Artikellage.

Erfindungsgemäß weist der umlaufende geschlossene Rahmen der Komprimiervorrichtung einen rechteckigen Querschnitt auf und umfasst vier Rahmenteile. Die Rahmenteile umgeben dabei die besagte Öffnung. Dies ist insbesondere vorteilhaft, wenn die zu palettierenden Artikellagen auch einen im Wesentlichen rechteckigen Querschnitt aufweisen.

An jedem der Rahmenteile ist ein Schieber angeordnet. Die Schieber sind dabei jeweils an einer Seite der Rahmenteile angeordnet, die der Öffnung zugewandt ist.

Erfindungsgemäß ist mindestens ein Schieber zusätzlich in der Vertikalrichtung von einer Warteposition in eine Arbeitsposition bewegbar. Dies ermöglicht, dass eine Artikellage in die horizontale Richtung in die Öffnung der Komprimiervorrichtung hinein bewegt wird, während sich der Schieber in der Warteposition befindet. Anschließend wird der Schieber in die Arbeitsposition bewegt, wo er sich in Vertikalrichtung auf Höhe der Artikellage befindet.

Der Schieber ist dabei translatorisch in die Vertikalrichtung von der Warteposition in die Arbeitsposition bewegbar.

In einer Ausführungsform, die nicht Gegenstand der Erfindung ist, kann der Schieber um eine in die Querrichtung verlaufende Schwenkachse von der Warteposition in die Arbeitsposition schwenkbar sein. Beim Bewegen von der Warteposition in die Arbeitsposition bewegt sich der besagte Schieber dann gleichzeitig rotatorisch in die Vertikalrichtung und in die Längsrichtung.

Bevorzugt sind die Komprimiervorrichtung und die Absetzeinrichtung relativ zueinander in die Vertikalrichtung beweglich. Somit kann die Absetzeinrichtung auf eine Höhe zur Aufnahme einer weiteren Artikellage verfahren werden, während die Komprimierung noch auf der Höhe der Oberfläche des bereits erstellten Lagenstapels verbleibt.

Besonders bevorzugt sind die Absetzeinrichtung und die Komprimiervorrichtung derart in die Vertikalrichtung beweglich, dass die Absetzeinrichtung sich in der Vertikalrichtung oberhalb der Komprimiervorrichtung befindet, sowie dass die Absetzeinrichtung sich in der Vertikalrichtung unterhalb der Komprimiervorrichtung befindet. Wenn die Absetzeinrichtung sich in der ersten Längsposition befindet, so kann die Absetzeinrichtung in der Vertikalrichtung an der Komprimiervorrichtung vorbei bewegt werden.

Die Aufgabe wird auch durch ein Verfahren zum Betrieb einer erfindungsgemäßen Palettiervorrichtung mit den Merkmalen des Anspruchs 4 gelöst. Vorteilhafte Ausgestaltungen und Weiterbildungen der Erfindung sind Gegenstand der Unteransprüche.

Das erfindungsgemäße Verfahren zum Betrieb einer erfindungsgemäßen Palettiervorrichtung umfasst folgende Schritte:
Zunächst erfolgt ein Fördern mindestens einer Artikellage auf die Transportfläche der Absetzeinrichtung, während die Absetzeinrichtung sich in einer ersten Längsposition befindet, in welcher die Transportfläche zu dem Rahmen der Komprimiervorrichtung in eine Längsrichtung versetzt angeordnet ist.

Danach erfolgt ein Bewegen der Absetzeinrichtung relativ zu der Komprimiervorrichtung in die Längsrichtung zu einer zweiten Längsposition, in welcher eine Projektion der durchgehenden Öffnung der Komprimiervorrichtung in der Vertikalrichtung auf der Transportfläche steht.

Anschließend erfolgt ein Komprimieren der Artikellage durch Bewegen der Schieber auf die Artikellage zu. Die Schieber werden dabei insbesondere translatorisch bewegt. Gleichzeitig zum Komprimieren wird die Artikellage vorzugsweise auch in der Öffnung der Komprimiervorrichtung zentriert, während die Artikellage sich auf der Transportfläche der Absetzeinrichtung befindet.

Dann erfolgt ein Bewegen der Absetzeinrichtung relativ zu der Komprimiervorrichtung in die Längsrichtung zurück zu der ersten Längsposition. Die Artikellage wird dadurch an einem der Schieber abgestreift und fällt auf eine Oberfläche einer unter der Komprimiervorrichtung befindlichen Palette oder auf einen auf der Palette befindlichen Lagenstapel.

Die Absetzeinrichtung umfasst beispielsweise einen umlaufenden Fördergurt. Der umlaufende Fördergurt der Absetzeinrichtung definiert dabei die Transportfläche zum Transport der Artikellage.

Beim Bewegen der Absetzeinrichtung relativ zu der Komprimiervorrichtung in die Längsrichtung zurück zu der ersten Längsposition kann die Artikellage auch mittels des Fördergurtes synchron zu der Bewegung der Absetzeinrichtung, aber in entgegengesetzter Richtung, gefördert und somit produktschonend abgesetzt werden. Der Fördergurt läuft dabei derart synchron zu der Bewegung der Absetzeinrichtung relativ zu der Komprimiervorrichtung, dass die Artikellage relativ zu der Komprimiervorrichtung nicht oder nur unwesentlich bewegt wird. Die Absetzeinrichtung wird somit unter der Komprimiervorrichtung weg gezogen, während die Artikellage bei der Komprimiervorrichtung verbleibt. Die Bewegung der Absetzeinrichtung kann dabei derart mit der Bewegung des Fördergurtes synchronisiert sein, dass die Artikellage nicht in Berührung mit den Schiebern gelangt.

Es ist aber auch denkbar, während der Bewegung der Absetzeinrichtung relativ zu der Komprimiervorrichtung in die Längsrichtung zurück zu der ersten Längsposition die Geschwindigkeit des Fördergurtes geringfügig zu variieren. Insbesondere kann der Fördergurt zu Beginn der Bewegung der Absetzeinrichtung geringfügig schneller laufen, wodurch die Artikellage gegen einen Schieber gedrückt wird. Zum Ende der Bewegung der Absetzeinrichtung kann der Fördergurt geringfügig langsamer laufen, wodurch die Artikellage gegen einen gegenüberliegenden Schieber gedrückt wird. Dadurch kann die Artikellage nach zwei Seiten, nämlich nach vorne und nach hinten, ausgerichtet werden. Dies ist insbesondere nützlich, wenn die Artikellage innen Lücken aufweist.

Erfindungsgemäß wird unmittelbar vor dem Komprimieren der Artikellage mindestens ein Schieber von einer Warteposition, in welcher der Schieber sich in der Vertikalrichtung oberhalb der Artikellage befindet, in eine Arbeitsposition bewegt, in welcher der Schieber sich in der Vertikalrichtung auf Höhe der Artikellage befindet. Die Artikellage wird dabei in die horizontale Richtung in die Öffnung der Komprimiervorrichtung hinein bewegt, während sich der Schieber in der Warteposition befindet. Wenn die Artikellage sich in der Öffnung der Komprimiervorrichtung befindet, wird der Schieber in die Arbeitsposition bewegt.

Gemäß einer anderen vorteilhaften Ausgestaltung der Erfindung werden unmittelbar vor dem Komprimieren der Artikellage die Komprimiervorrichtung und die Absetzeinrichtung relativ zueinander derart in die Vertikalrichtung bewegt, dass der mindestens eine Schieber sich in Vertikalrichtung auf Höhe der Artikellage befindet. Die besagte Bewegung der Komprimiervorrichtung und der Absetzeinrichtung relativ zueinander in die Vertikalrichtung erfolgt dabei, während sich die Absetzeinrichtung in der zweiten Längsposition befindet.

Vorzugsweise werden vor dem Bewegen der Absetzeinrichtung zu der zweiten Längsposition die Komprimiervorrichtung und die Absetzeinrichtung relativ zueinander derart in die Vertikalrichtung bewegt, dass die Absetzeinrichtung sich in der Vertikalrichtung unterhalb der Komprimiervorrichtung befindet.

Damit die zu palettierende Artikellage von der Komprimiervorrichtung bearbeitet werden kann, weist die Öffnung der Komprimiervorrichtung vorteilhaft in der Längsrichtung sowie in einer Querrichtung eine größere Ausdehnung auf als die zu palettierende Artikellage.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt, sondern wird durch die Ansprüche definiert. Die Figuren stellen den Gegenstand der Erfindung nur schematisch dar. Es zeigen:
- Figur 1: eine schematische Frontansicht einer Palettiervorrichtung,
- Figur 2: eine weitere schematische Frontansicht der Palettiervorrichtung aus Figur 1,
- Figur 3: eine perspektivische Darstellung einer Komprimiervorrichtung
- Figur 4: eine schematische Schnittdarstellung der Komprimiervorrichtung aus Figur 3 und
- Figur 5: eine weitere schematische Schnittdarstellung der Komprimiervorrichtung aus Figur 3.

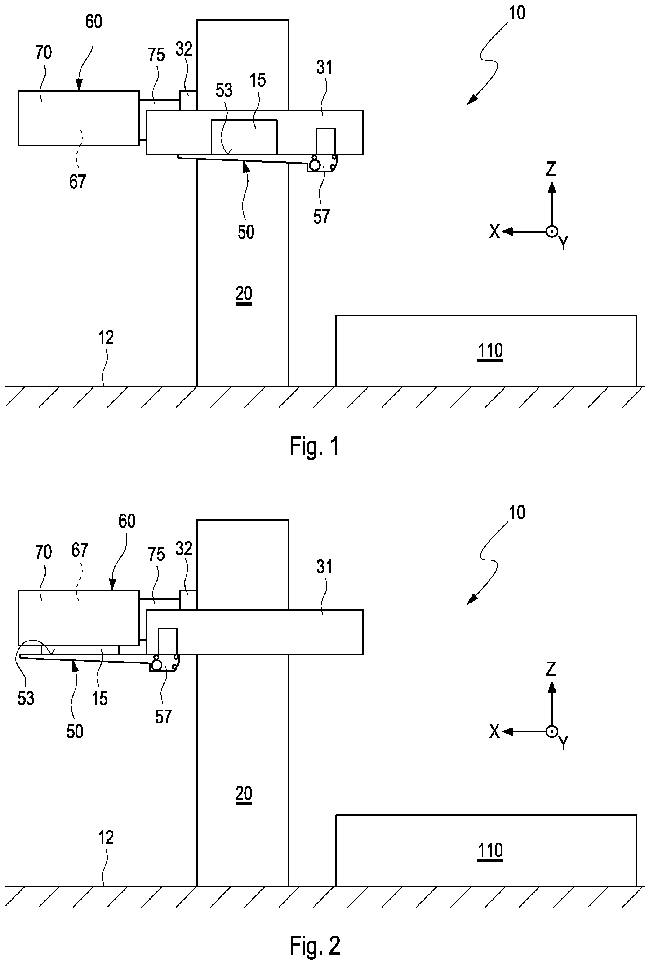

Figur 1 zeigt eine schematische Frontansicht einer Palettiervorrichtung 10. Die Palettiervorrichtung 10 steht auf einem Fußboden 12 und dient zum Absetzen von Gütern, insbesondere von einer Artikellage 15, auf einer hier nicht dargestellten Palette. Die Artikellage 15 wird der Palettiervorrichtung 10 von einer Zuführvorrichtung 110 zugeführt. Dabei werden zunächst einzelne Güter von der Zuführvorrichtung 110 zu einer stapelfähigen Artikellage 15 zusammengefasst, und die Artikellage 15 wird anschließend in eine Längsrichtung X weiter zu der Palettiervorrichtung 10 transportiert. Die Längsrichtung X verläuft parallel zu dem Fußboden 12.

Die Palettiervorrichtung 10 umfasst eine Hubvorrichtung 20, welche sich im Wesentlichen in eine Vertikalrichtung Z von dem Fußboden 12 weg erstreckt. Die Vertikalrichtung Z verläuft rechtwinklig zu dem Fußboden 12 und rechtwinklig zu der Längsrichtung X. Eine Querrichtung Y erstreckt sich rechtwinklig zu der Vertikalrichtung Z und rechtwinklig zu der Längsrichtung X.

An der Hubvorrichtung 20 ist vorliegend ein erster Wagen 31 angeordnet, welcher in Vertikalrichtung Z beweglich ist. An dem ersten Wagen 31 ist eine Absetzeinrichtung 50 befestigt. Die Absetzeinrichtung 50 ist somit in die Vertikalrichtung Z relativ zu der Hubvorrichtung 20 beweglich. Die Absetzeinrichtung 50 ist zusätzlich in Längsrichtung X relativ zu dem ersten Wagen 31 und der Hubvorrichtung 20 beweglich.

Die Absetzeinrichtung 50 definiert eine Transportfläche 53 zum Transport der Artikellage 15. Die Absetzeinrichtung 50 umfasst dazu beispielsweise einen hier verdeckten umlaufenden Fördergurt, welcher die Transportfläche 53 definiert. Die Transportfläche 53 erstreckt sich in einer Ebene, welche durch die Längsrichtung X und die Querrichtung Y definiert ist. Die Vertikalrichtung Z verläuft somit rechtwinklig zu der Transportfläche 53.

Die Absetzeinrichtung 50 kann dabei zwei Seitenwände 57 aufweisen, welche sich vorwiegend in Längsrichtung X erstrecken und parallel zueinander verlaufen. Die Transportfläche 53 der Absetzeinrichtung 50 ist in diesem Fall rechteckig, insbesondere annähernd quadratisch, ausgestaltet. Die Transportfläche 53 weist also beispielsweise eine Ausdehnung in Querrichtung Y auf, welche zumindest annähernd einer Ausdehnung in Längsrichtung X entspricht.

An der Hubvorrichtung 20 ist vorliegend auch ein zweiter Wagen 32 angeordnet, welcher in Vertikalrichtung Z beweglich ist. An dem zweiten Wagen 32 ist eine Komprimiervorrichtung 60 befestigt. Die Komprimiervorrichtung 60 ist somit in die Vertikalrichtung Z relativ zu der Hubvorrichtung 20 beweglich. Der erste Wagen 31 und der zweite Wagen 32 sind annähernd unabhängig voneinander in die Vertikalrichtung Z beweglich. Somit sind auch die Komprimiervorrichtung 60 und die Absetzeinrichtung 50 annähernd unabhängig voneinander und relativ zueinander in die Vertikalrichtung Z beweglich.

Die Komprimiervorrichtung 60 weist einen umlaufenden geschlossenen Rahmen 70 auf. Die Komprimiervorrichtung 60 weist ferner einen Arm 75 zur Verbindung des Rahmens 70 mit dem zweiten Wagen 32 auf. Die Absetzeinrichtung 50 ist auch in die Längsrichtung X relativ zu der Komprimiervorrichtung 60 beweglich. Somit ist auch die Transportfläche 53 relativ zu dem Rahmen 70 in die Längsrichtung X beweglich.

Es ist auch denkbar, dass der zweite Wagen 32 entfällt, und dass die Komprimiervorrichtung 60 ebenfalls an dem ersten Wagen 31 befestigt ist. in diesem Fall sind die Komprimiervorrichtung 60 und die Absetzeinrichtung 50 gemeinsam relativ zu der Hubvorrichtung 20 in die Vertikalrichtung Z beweglich. Die Komprimiervorrichtung 60 und die Absetzeinrichtung 50 sind in diesem Fall auch relativ zueinander in die Längsrichtung X, jedoch nicht relativ zueinander in die Vertikalrichtung Z beweglich.

In der hier gezeigten Darstellung befindet sich eine Artikellage 15 auf der Transportfläche 53 der Absetzeinrichtung 50. Die Absetzeinrichtung 50 befindet sich in einer ersten Längsposition. In der ersten Längsposition ist die Transportfläche 53 der Absetzeinrichtung 50 zu dem Rahmen 70 der Komprimiervorrichtung 60 in die Längsrichtung X versetzt angeordnet.

In Figur 2 ist eine weitere schematische Frontansicht der Palettiervorrichtung 10 aus Figur 1 dargestellt. Im Unterschied zu der Darstellung in Figur 1 befindet sich bei der Darstellung in Figur 2 die Absetzeinrichtung 50 in einer zweiten Längsposition. In der zweiten Längsposition ist die Transportfläche 53 der Absetzeinrichtung 50 direkt unter dem Rahmen 70 der Komprimiervorrichtung 60 angeordnet.

Der Rahmen 70 der Komprimiervorrichtung 60 umgibt eine hier verdeckte in die Vertikalrichtung Z durchgehende Öffnung 67. In der zweiten Längsposition steht eine Projektion der durchgehenden Öffnung 67 in der Vertikalrichtung Z auf der Transportfläche 53 der Absetzeinrichtung 50. In der hier gezeigten Darstellung ragt die auf der Transportfläche 53 befindliche Artikellage 15 in die Öffnung 67 der Komprimiervorrichtung 60 hinein.

Beim Palettieren wird die Artikellage 15 auf die hier nicht dargestellte Palette oder auf einen auf der besagten Palette befindlichen Lagenstapel abgesetzt. Die Palette befindet sich dabei in der Vertikalrichtung Z unter der Komprimiervorrichtung 60. Mehrere Artikellagen 15 bilden auf der Palette den Lagenstapel. Die Komprimiervorrichtung 60 kann in der Vertikalrichtung Z nach unten verfahren werden, wobei der Lagenstapel durch die Öffnung 67 ragt. Der Rahmen 70 umgibt dabei den Lagenstapel.

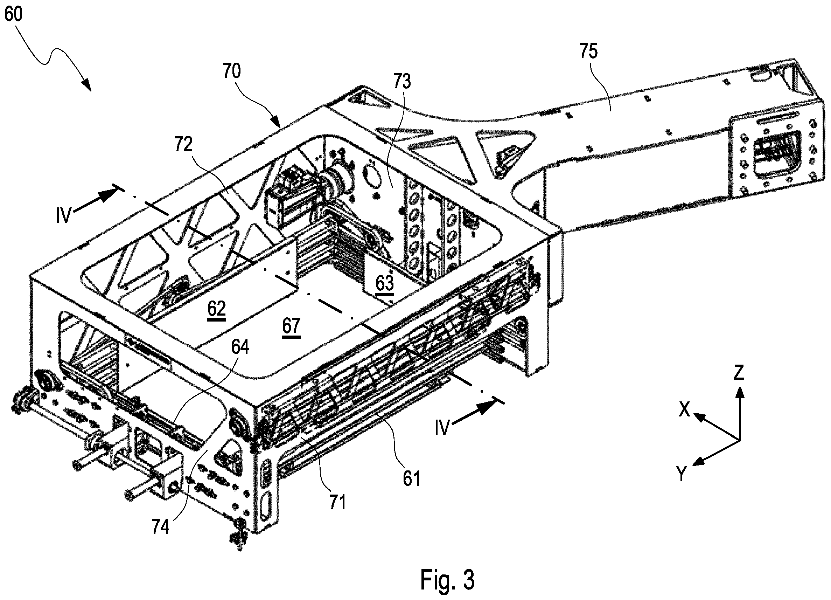

Figur 3 zeigt eine perspektivische Darstellung der Komprimiervorrichtung 60. Der umlaufende geschlossene Rahmen 70 der Komprimiervorrichtung 60 weist einen rechteckigen Querschnitt auf. Der Rahmen 70 umfasst ein erstes Rahmenteil 71 und ein zweites Rahmenteil 72, welche sich rechtwinklig zu der Längsrichtung X erstrecken. Der Rahmen 70 umfasst auch ein drittes Rahmenteil 73 und ein viertes Rahmenteil 74, welche sich rechtwinklig zu der Querrichtung Y erstrecken. Das erste Rahmenteil 71 und das zweite Rahmenteil 72 verlaufen also parallel zueinander und rechtwinklig zu dem dritten Rahmenteil 73 und dem vierten Rahmenteil 74.

Die besagten vier Rahmenteile 71, 72, 73, 74 umgeben dabei die bereits erwähnte, in die Vertikalrichtung Z durchgehende Öffnung 67. Eine Ausdehnung des ersten Rahmenteils 71 in die Vertikalrichtung Z ist vorliegend geringer als die Ausdehnung des zweiten Rahmenteils 72, des dritten Rahmenteils 73 und des vierten Rahmenteils 74 in die Vertikalrichtung Z. An dem dritten Rahmenteil 73 ist der Arm 75 befestigt. Der Arm 75 verläuft vorliegend geneigt zu der Längsrichtung X und geneigt zu der Querrichtung Y.

An dem ersten Rahmenteil 71 ist ein erster Schieber 61 angeordnet. An dem zweiten Rahmenteil 72 ist ein zweiter Schieber 62 angeordnet. An dem dritten Rahmenteil 73 ist ein dritter Schieber 63 angeordnet. An dem vierten Rahmenteil 74 ist ein vierter Schieber 64 angeordnet. Die Schieber 61, 62, 63, 64 sind in der hier gezeigten Darstellung in der Vertikalrichtung Z auf der gleichen Höhe angeordnet.

Der erste Schieber 61 ist relativ zu dem ersten Rahmenteil 71 in die Längsrichtung X beweglich. Der zweite Schieber 62 ist relativ zu dem zweiten Rahmenteil 72 in die Längsrichtung X beweglich. Der dritte Schieber 63 ist relativ zu dem dritten Rahmenteil 73 in die Querrichtung Y beweglich. Der vierte Schieber 64 ist relativ zu dem vierten Rahmenteil 74 in die Querrichtung Y beweglich. Die Schieber 61, 62, 63, 64 sind dabei insbesondere translatorisch in die Längsrichtung X beziehungsweise in die Querrichtung Y beweglich. Der erste Schieber 61 ist dabei zusätzlich noch relativ zu dem ersten Rahmenteil 71 in die Vertikalrichtung Z beweglich.

Wenn sich eine hier nicht gezeigte Artikellage 15 in der Öffnung 67 der Komprimiervorrichtung 60 befindet, so ist die besagte Artikellage 15 von den Schiebern 61, 62, 63, 64 umgeben. Werden die Schieber 61, 62, 63, 64 nun auf die Artikellage 15 zu bewegt, so erfolgt ein Komprimieren sowie ein Zentrieren der Artikellage 15 in der Öffnung 67 der Komprimiervorrichtung 60, sobald die Schieber 61, 62, 63, 64 die Artikellage 15 berühren.

Werden die Schieber 61, 62, 63, 64 nun von der Artikellage 15 weg bewegt, so sind die Schieber 61, 62, 63, 64 wieder von der Artikellage 15 beabstandet. Nun kann die Komprimiervorrichtung 60 in der Vertikalrichtung Z nach unten verfahren werden, wobei der Lagenstapel durch die Öffnung 67 ragt. Dadurch kann auch noch eine in dem Lagenstapel weiter unten befindliche Artikellage 15 nachträglich nachkomprimiert werden.

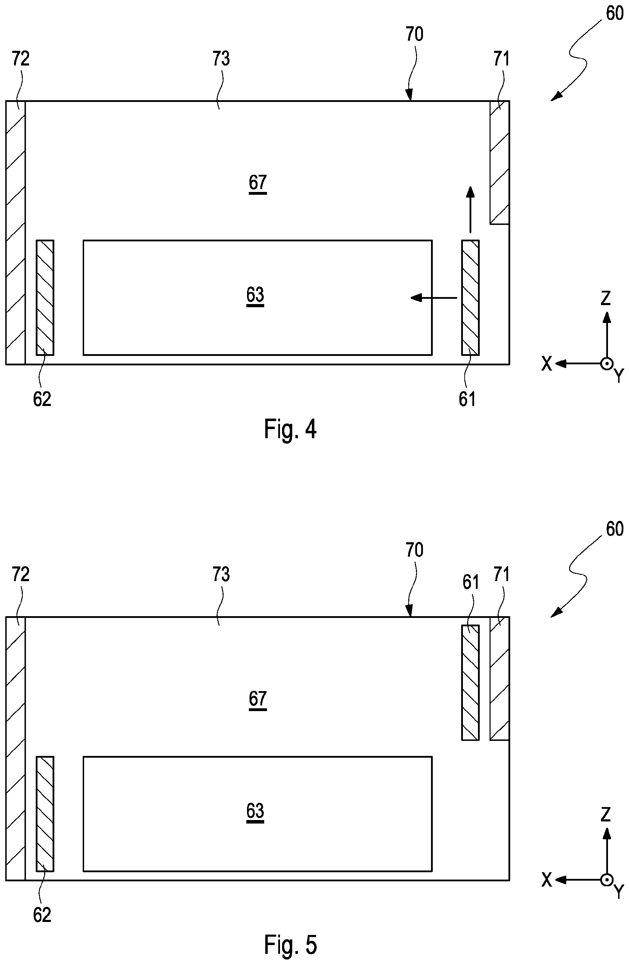

Figur 4 zeigt eine schematische Schnittdarstellung der Komprimiervorrichtung 60 aus Figur 3. Die gewählte Schnittebene verläuft dabei rechtwinklig zu der Querrichtung Y und parallel zu der Längsrichtung X sowie parallel zu der Vertikalrichtung Z.

In der hier gezeigten Darstellung befindet sich der erste Schieber 61 in einer Arbeitsposition. In der Arbeitsposition befindet sich der erste Schieber 61 in der Vertikalrichtung Z auf der gleichen Höhe wie der zweite Schieber 62, der dritte Schieber 63 und der hier nicht sichtbare vierte Schieber 64. Der erste Schieber 61 ist in die Vertikalrichtung Z relativ zu dem ersten Rahmenteil 71 translatorisch in eine Warteposition beweglich. Mit entsprechenden Pfeilen ist die Bewegungsrichtung des ersten Schiebers 61, nämlich translatorisch in die Vertikalrichtung Z zwischen der Arbeitsposition und der Warteposition, sowie translatorisch in die Längsrichtung X, angegeben.

Figur 5 zeigt eine weitere schematische Schnittdarstellung der Komprimiervorrichtung 60 aus Figur 3. In der hier gezeigten Darstellung befindet sich der erste Schieber 61 in der Warteposition. Dabei ist der erste Schieber 61, im Vergleich zu der in Figur 4 gezeigten Arbeitsposition, in die Vertikalrichtung Z relativ zu dem ersten Rahmenteil 71 translatorisch nach oben bewegt.

In einer Ausführungsform, die nicht Gegenstand der Erfindung ist, ist der erste Schieber 61 um eine Schwenkachse von der Arbeitsposition in eine Warteposition schwenkbar. Die Schwenkachse verläuft dabei vorzugsweise in die Querrichtung Y. Beim Bewegen von der Warteposition in die Arbeitsposition bewegt sich der erste Schieber 61 dann gleichzeitig rotatorisch in die Vertikalrichtung Z und in die Längsrichtung X.

Wenn der erste Schieber 61 sich in der Warteposition befindet kann eine hier nicht gezeigte Artikellage 15 in die Längsrichtung X unter dem ersten Schieber 61 sowie unter dem ersten Rahmenteil 71 hindurch in die Öffnung 67 der Komprimiervorrichtung 60 hinein bewegt werden. Anschließend wird der erste Schieber 61 in die Arbeitsposition bewegt. Dann befindet sich auch der erste Schieber 61 in der Vertikalrichtung Z auf Höhe der Artikellage 15.

Die Erfindung ist nicht auf die hier beschriebenen Ausführungsbeispiele beschränkt. Vielmehr ist innerhalb des durch die Ansprüche angegebenen Schutzbereichs eine Vielzahl von Abwandlungen möglich, die im Rahmen fachmännischen Handelns liegen.

### Bezugszeichenliste

- 10: Palettiervorrichtung
- 12: Fußboden
- 15: Artikellage
- 20: Hubvorrichtung
- 31: erster Wagen
- 32: zweiter Wagen
- 50: Absetzeinrichtung
- 53: Transportfläche
- 57: Seitenwand
- 60: Komprimiervorrichtung
- 61: erster Schieber
- 62: zweiter Schieber
- 63: dritter Schieber
- 64: vierter Schieber
- 67: Öffnung
- 70: Rahmen
- 71: erstes Rahmenteil
- 72: zweites Rahmenteil
- 73: drittes Rahmenteil
- 74: viertes Rahmenteil
- 75: Arm
- 110: Zuführvorrichtung
- X: Längsrichtung
- Y: Querrichtung
- Z: Vertikalrichtung

## Patentansprüche

1. Palettiervorrichtung (10), umfassend
eine Komprimiervorrichtung (60), welche
einen umlaufenden geschlossenen Rahmen (70) aufweist,
wobei an dem Rahmen (70) mindestens ein in eine horizontale Richtung beweglicher Schieber (61, 62, 63, 64) angeordnet ist, und
eine Absetzeinrichtung (50), welche eine Transportfläche (53) zum Transport von Artikellagen (15) definiert,
wobei der Rahmen (70) eine in eine Vertikalrichtung (Z) durchgehende Öffnung (67) umgibt, wobei
die Absetzeinrichtung (50) relativ zu der Komprimiervorrichtung (60) zwischen einer ersten Längsposition, in welcher die Transportfläche (53) zu dem Rahmen (70) in eine Längsrichtung (X) versetzt angeordnet ist, und einer zweiten Längsposition, in welcher eine Projektion der durchgehenden Öffnung (67) in der Vertikalrichtung (Z) auf der Transportfläche (53) steht, in die Längsrichtung (X) beweglich ist, und wobei
die Komprimiervorrichtung (60), welche einen ersten Schieber (61), einen zweiten Schieber (62), einen dritten Schieber (63) und einen vierten Schieber (64) umfasst, die in einer Arbeitsposition in Vertikalrichtung auf gleicher Höhe angeordnet sind, und die Absetzeinrichtung (50) an einer Hubvorrichtung (20) in die Vertikalrichtung (Z) beweglich angeordnet sind,
wobei der Rahmen (70) einen rechteckigen Querschnitt und vier Rahmenteile (71, 72, 73, 74) aufweist und an jedem der Rahmenteile (71, 72, 73, 74) ein Schieber (61, 62, 63, 64) angeordnet ist, wobei an dem ersten Rahmenteil (71) der erste Schieber (61), an dem zweiten Rahmenteil (72) der zweite Schieber (62), an dem dritten Rahmenteil (73) der dritte Schieber (63) und an dem vierten Rahmenteil (74) der vierte Schieber (64) angeordnet ist, wobei
- der erste Schieber (61) relativ zum ersten Rahmenteil (71) in Längsrichtung (X) beweglich,
- der zweite Schieber (62) relativ zum zweiten Rahmenteil (72) in Längsrichtung (X) beweglich,
- der dritte Schieber (63) relativ zum dritten Rahmenteil (73) in Querrichtung (Y) beweglich und
- der vierte Schieber (64) relativ zum vierten Rahmenteil (74) in Querrichtung (Y) beweglich ist, **dadurch gekennzeichnet, dass** der erste Schieber (61) zusätzlich relativ zum ersten Rahmenteil (71) in die Vertikalrichtung (Z) von einer Warteposition, in welcher der erste Schieber (61) sich in der Vertikalrichtung (Z) oberhalb der Artikellage (15) befindet, in eine Arbeitsposition, in welcher der erste Schieber (61) sich in der Vertikalrichtung (Z) auf Höhe der Artikellage (15) befindet, translatorisch beweglich ist.

2. Palettiervorrichtung (10) nach einem der vorstehenden Ansprüche, **dadurch gekennzeichnet, dass**
die Komprimiervorrichtung (60) und die Absetzeinrichtung (50) relativ zueinander in die Vertikalrichtung (Z) beweglich sind.

3. Palettiervorrichtung (10) nach Anspruch 2, **dadurch gekennzeichnet, dass** die Absetzeinrichtung (50) und die Komprimiervorrichtung (60) derart beweglich sind, dass die Absetzeinrichtung (50) sich in der Vertikalrichtung (Z) oberhalb der Komprimiervorrichtung (60) befindet, sowie dass die Absetzeinrichtung (50) sich in der Vertikalrichtung (Z) unterhalb der Komprimiervorrichtung (60) befindet.

4. Verfahren zum Betrieb einer Palettiervorrichtung (10) nach einem der vorstehenden Ansprüche,
umfassend folgende Schritte:
- Fördern mindestens einer Artikellage (15) auf die Transportfläche (53) der Absetzeinrichtung (50), während die Absetzeinrichtung (50) sich in einer ersten Längsposition befindet, in welcher die Transportfläche (53) zu dem Rahmen (70) in eine Längsrichtung (X) versetzt angeordnet ist,
- Bewegen der Absetzeinrichtung (50) relativ zu der Komprimiervorrichtung (60) in die Längsrichtung (X) zu einer zweiten Längsposition, in welcher eine Projektion der durchgehenden Öffnung (67) in der Vertikalrichtung (Z) auf der Transportfläche (53) steht,
- Komprimieren der Artikellage (15) durch Bewegen der Schieber (61, 62, 63, 64) auf die Artikellage (15) zu,
- Bewegen der Absetzeinrichtung (50) relativ zu der Komprimiervorrichtung (60) in die Längsrichtung (X) zu der ersten Längsposition, wobei unmittelbar vor dem Komprimieren der Artikellage (15) der erste Schieber (61) relativ zum ersten Rahmenteil (71) in die Vertikalrichtung (Z) von der Warteposition in die Arbeitsposition translatorisch bewegt wird, wobe beim Komprimieren der Artikellage (15)
- der erste Schieber (61) relativ zum ersten Rahmenteil (71) in Längsrichtung (X) bewegt wird,
- der zweite Schieber (62) relativ zum zweiten Rahmenteil (72) in Längsrichtung (X) bewegt wird,
- der dritte Schieber (63) relativ zum dritten Rahmenteil (73) in Querrichtung (Y) bewegt wird und
- der vierte Schieber (64) relativ zum vierten Rahmenteil (74) in Querrichtung (Y) bewegt wird.

5. Verfahren nach Anspruch 4, wobei
unmittelbar vor dem Komprimieren der Artikellage (15) die Komprimiervorrichtung (60) und die Absetzeinrichtung (50) relativ zueinander derart in die Vertikalrichtung (Z) bewegt werden, dass der mindestens eine Schieber (61, 62, 63, 64) sich in Vertikalrichtung (Z) auf Höhe der Artikellage (15) befindet.

6. Verfahren nach einem der Ansprüche 4 bis 5, wobei
vor dem Bewegen der Absetzeinrichtung (50) zu der zweiten Längsposition die Komprimiervorrichtung (60) und die Absetzeinrichtung (50) relativ zueinander derart in die Vertikalrichtung (Z) bewegt werden, dass die Absetzeinrichtung (50) sich in der Vertikalrichtung (Z) unterhalb der Komprimiervorrichtung (60) befindet.

7. Verfahren nach einem der Ansprüche 4 bis 6, wobei
die Öffnung (67) in der Längsrichtung (X) sowie in einer Querrichtung (Y) eine größere Ausdehnung aufweist als die Artikellage (15).

## Claims

1. Palletizing apparatus (10), comprising
a compressing apparatus (60) which
has a peripheral closed frame (70),
at least one slide (61, 62, 63, 64) which can be moved in a horizontal direction being arranged on the frame (70), and
a depositing device (50) which defines a transport surface (53) for transporting article layers (15),
the frame (70) surrounding an opening (67) which is continuous in a vertical direction (Z), it being possible for the depositing device (50) to be moved relative to the compressing apparatus (60) in the longitudinal direction (X) between a first longitudinal position, in which the transport surface (53) is arranged offset with respect to the frame (70) in a longitudinal direction (X), and a second longitudinal position, in which a projection of the continuous opening (67) in the vertical direction (Z) lies on the transport surface (53), and the compressing device (60), which comprises a first slide (61), a second slide (62), a third slide (63) and a fourth slide (64) which are arranged at the same height in a working position in the vertical direction, and the depositing device (50) being arranged on a lifting apparatus (20) such that they can be moved in the vertical direction (Z),
the frame (70) having a rectangular cross section for frame parts (71, 72, 73, 74), and a slide (61, 62, 63, 64) being arranged on each of the frame parts (71, 72, 73, 74), the first slide (61) being arranged on the first frame part (71), the second slide (62) being arranged on the second frame part (72), the third slide (63) being arranged on the third frame part (73), and the fourth slide (64) being arranged on the fourth frame part (74),
- it being possible for the first slide (61) to be moved in the longitudinal direction (X) relative to the first frame part (71),
- it being possible for the second slide (62) to be moved in the longitudinal direction (X) relative to the second frame part (72),
- it being possible for the third slide (63) to be moved in the transverse direction (Y) relative to the third frame part (73), and
- it being possible for the fourth slide (64) to be moved in the transverse direction (Y) relative to the fourth frame part (74),
**characterized in that** the first slide (61) can additionally be moved translationally relative to the first frame part (71) in the vertical direction (Z) from a waiting position, in which the first slide (61) is situated above the article layer (15) in the vertical direction (Z), into a working position, in which the first slide (61) is situated at the level of the article layer (15) in the vertical direction (Z).

2. Palletizing apparatus (10) according to one of the preceding claims, **characterized in that** the compressing apparatus (60) and the depositing device (50) can be moved in the vertical direction (Z) relative to one another.

3. Palletizing apparatus (10) according to Claim 2, **characterized in that** the depositing device (50) and the compressing apparatus (60) can be moved in such a way that the depositing device (50) is situated above the compressing apparatus (60) in the vertical direction (Z), and that the depositing device (50) is situated below the compressing apparatus (60) in the vertical direction (Z).

4. Method for operating a palletizing apparatus (10) according to one of the preceding claims,
comprising the following steps:
- conveying of at least one article layer (15) onto the transport surface (53) of the depositing device (50), while the depositing device (50) is situated in a first longitudinal position, in which the transport surface (53) is arranged offset in the longitudinal direction (X) with respect to the frame (70),
- moving of the depositing device (50) relative to the compressing apparatus (60) in the longitudinal direction (X) to a second longitudinal position, in which a projection of the continuous opening (67) in the vertical direction (Z) lies on the transport surface (53),
- compressing of the article layer (15) by way of movement of the slides (61, 62, 63, 64) towards the article layer (15),
- moving of the depositing device (50) relative to the compressing apparatus (60) in the longitudinal direction (X) to the first longitudinal position, the first slide (61) being moved translationally, immediately before the compressing of the article layer (15), relative to the first frame part (71) in the vertical direction (Z) from the waiting position into the working position;
during the compressing of the article layer (15),
- the first slide (61) being moved in the longitudinal direction (X) relative to the first frame part (71),
- the second slide (62) being moved in the longitudinal direction (X) relative to the second frame part (72),
- the third slide (63) being moved in the transverse direction (Y) relative to the third frame part (73), and
- the fourth slide (64) being moved in the transverse direction (Y) relative to the fourth frame part (74).

5. Method according to Claim 4,
the compressing apparatus (60) and the depositing device (50) being moved in the vertical direction (Z) relative to one another immediately before the compressing of the article layer (15), in such a way that the at least one slide (61, 62, 63, 64) is situated at the level of the article layer (15) in the vertical direction (Z).

6. Method according to either of Claims 4 and 5,
the compressing apparatus (60) and the depositing apparatus (50) being moved in the vertical direction (Z) relative to one another before the moving of the depositing device (50) to the second longitudinal position, in such a way that the depositing device (50) is situated below the compressing apparatus (60) in the vertical direction (Z).

7. Method according to one of Claims 4 to 6,
the opening (67) having a greater extent in the longitudinal direction (X) and in a transverse direction (Y) than the article layer (15).

## Revendications

1. Dispositif de palettisation (10), comprenant
un dispositif de compression (60), qui présente un cadre fermé périphérique (70),
au moins un coulisseau (61, 62, 63, 64) mobile dans une direction horizontale étant agencé sur le cadre (70), et un dispositif de dépôt (50), qui définit une surface de transport (53) pour le transport de couches d'articles (15),
le cadre (70) entourant une ouverture traversante (67) dans une direction verticale (Z),
le dispositif de dépôt (50) étant mobile dans la direction longitudinale (X) par rapport au dispositif de compression (60) entre une première position longitudinale, dans laquelle la surface de transport (53) est agencée en décalage par rapport au cadre (70) dans une direction longitudinale (X), et une deuxième position longitudinale, dans laquelle une projection de l'ouverture traversante (67) dans la direction verticale (Z) se trouve sur la surface de transport (53), et
le dispositif de compression (60), qui comprend un premier coulisseau (61), un deuxième coulisseau (62), un troisième coulisseau (63) et un quatrième coulisseau (64) qui, dans une position de travail, qui sont agencés à la même hauteur dans la direction verticale, et le dispositif de dépôt (50) étant agencés sur un dispositif de levage (20) de manière mobile dans la direction verticale (Z),
le cadre (70) présentant une section transversale rectangulaire et quatre parties de cadre (71, 72, 73, 74), et un coulisseau (61, 62, 63, 64) étant agencé sur chacune des parties de cadre (71, 72, 73, 74), le premier coulisseau (61) étant agencé sur la première partie de cadre (71), le deuxième coulisseau (62) sur la deuxième partie de cadre (72), le troisième coulisseau (63) sur la troisième partie de cadre (73) et le quatrième coulisseau (64) sur la quatrième partie de cadre (74),
- le premier coulisseau (61) étant mobile dans la direction longitudinale (X) par rapport à la première partie de cadre (71),
- le deuxième coulisseau (62) étant mobile dans la direction longitudinale (X) par rapport à la deuxième partie de cadre (72),
- le troisième coulisseau (63) étant mobile dans la direction transversale (Y) par rapport à la troisième partie de cadre (73) et
- le quatrième coulisseau (64) étant mobile dans la direction transversale (Y) par rapport à la quatrième partie de cadre (74),
**caractérisé en ce que** le premier coulisseau (61) est en outre mobile en translation par rapport à la première partie de cadre (71) dans la direction verticale (Z) d'une position d'attente, dans laquelle le premier coulisseau (61) se trouve au-dessus de la couche d'articles (15) dans la direction verticale (Z), à une position de travail, dans laquelle le premier coulisseau (61) se trouve à la hauteur de la couche d'articles (15) dans la direction verticale (Z).

2. Dispositif de palettisation (10) selon l'une quelconque des revendications précédentes, **caractérisé en ce que** le dispositif de compression (60) et le dispositif de dépôt (50) sont mobiles l'un par rapport à l'autre dans la direction verticale (Z).

3. Dispositif de palettisation (10) selon la revendication 2, **caractérisé en ce que** le dispositif de dépôt (50) et le dispositif de compression (60) sont mobiles de telle sorte que le dispositif de dépôt (50) se trouve au-dessus du dispositif de compression (60) dans la direction verticale (Z) et que le dispositif de dépôt (50) se trouve au-dessous du dispositif de compression (60) dans la direction verticale (Z).

4. Procédé d'exploitation d'un dispositif de palettisation (10) selon l'une quelconque des revendications précédentes, comprenant les étapes suivantes :
- le transport d'au moins une couche d'articles (15) sur la surface de transport (53) du dispositif de dépôt (50), tandis que le dispositif de dépôt (50) se trouve dans une première position longitudinale, dans laquelle la surface de transport (53) est agencée en décalage par rapport au cadre (70) dans une direction longitudinale (X),
- le déplacement du dispositif de dépôt (50) par rapport au dispositif de compression (60) dans la direction longitudinale (X) vers une deuxième position longitudinale, dans laquelle une projection de l'ouverture traversante (67) dans la direction verticale (Z) se trouve sur la surface de transport (53),
- la compression de la couche d'articles (15) par déplacement des coulisseaux (61, 62, 63, 64) vers la couche d'articles (15),
- le déplacement du dispositif de dépôt (50) par rapport au dispositif de compression (60) dans la direction longitudinale (X) vers la première position longitudinale,
immédiatement avant la compression de la couche d'articles (15), le premier coulisseau (61) étant déplacé en translation par rapport à la première partie de cadre (71) dans la direction verticale (Z) de la position d'attente à la position de travail,
lors de la compression de la couche d'articles (15),
- le premier coulisseau (61) étant déplacé par rapport à la première partie de cadre (71) dans la direction longitudinale (X),
- le deuxième coulisseau (62) étant déplacé par rapport à la deuxième partie de cadre (72) dans la direction longitudinale (X),
- le troisième coulisseau (63) étant déplacé par rapport à la troisième partie de cadre (73) dans la direction transversale (Y) et
- le quatrième coulisseau (64) étant déplacé par rapport à la quatrième partie de cadre (74) dans la direction transversale (Y).

5. Procédé selon la revendication 4, dans lequel, immédiatement avant la compression de la couche d'articles (15), le dispositif de compression (60) et le dispositif de dépôt (50) sont déplacés l'un par rapport à l'autre dans la direction verticale (Z) de telle sorte que l'au moins un coulisseau (61, 62, 63, 64) se trouve à la hauteur de la couche d'articles (15) dans la direction verticale (Z).

6. Procédé selon l'une quelconque des revendications 4 à 5, dans lequel, avant le déplacement du dispositif de dépôt (50) vers la deuxième position longitudinale, le dispositif de compression (60) et le dispositif de dépôt (50) sont déplacés l'un par rapport à l'autre dans la direction verticale (Z) de telle sorte que le dispositif de dépôt (50) se trouve en dessous du dispositif de compression (60) dans la direction verticale (Z).

7. Procédé selon l'une quelconque des revendications 4 à 6, dans lequel l'ouverture (67) présente une extension plus grande que la couche d'articles (15) dans la direction longitudinale (X) ainsi que dans une direction transversale (Y).
